# EUROPÄISCHE PATENTSCHRIFT

(11) **EP 0 516 788 B1**
(45) Veröffentlichungstag und Bekanntmachung des Hinweises auf die Patenterteilung: **18.10.1995**
(21) Anmeldenummer: 92901396.9
(22) Anmeldetag: 20.12.1991
(51) Int. Cl.: A23B 4/16

(54) **VERFAHREN UND VORRICHTUNG ZUR BEHANDLUNG VON FRISCHFLEISCH**
PROCESS AND DEVICE FOR PROCESSING FRESH MEAT
PROCEDE ET DISPOSITIF POUR LE TRAITEMENT DE VIANDE FRAICHE

(30) Priorität: 20.12.1990 DE 4041070; 03.05.1991 DE 4114524
(43) Veröffentlichungstag der Anmeldung: 09.12.1992
(73) Patentinhaber: INES AG, CH-4600 Olten (CH)
(72) Erfinder: VERHAAG, Hubert, D-7840 Müllheim 16 (DE); BARTEL, Gerhard, D-7801 Merdingen (DE); SCHLEGEL, Jürgen, D-7801 Umkirch (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) Internationale Anmeldenummer: EP9102485
(87) Internationale Veröffentlichungsnummer: WO9210939

(56) Entgegenhaltungen:
- DE-A- 1 692 190
- DE-A- 1 916 749
- FR-A- 2 595 583
- GB-A- 2 031 710
- NL-A- 7 512 818
- US-A- 2 711 373
- US-A- 3 047 404
- US-A- 3 922 358
- FOOD TECHNOLOGY . INSTITUTE OF FOODS TECHNOLOGISTS. Bd. 42, Nr. 9, September 1988, CHICAGO (US) L. L. YOUNG ET AL.: 'fresh red meats: a place to apply modified atmospheres' pages 65-66,68

## Beschreibung

Die Erfindung betrifft ein Verfahren zur Behandlung von Frischfleisch, insbesondere zum Reifen und Konsvervieren von frischem Rind-, Schweine-, Kalb-, Lamm-, Wild-, Geflügelfleisch, Fisch, Rohwurst und Schinken, bei dem das Frischfleisch in einer von der Außenatmosphäre verschiedenen Gasatmosphäre während einer vorgebbaren Zeitspanne zwischengelagert wird. Ferner ist die Erfindung auf eine Vorrichtung zur Durchführung dieses Verfahrens gerichtet.

Die DE-A-1 692 190 beschreibt ein Verfahren zum Herstellen einer Portionsverpackung für frisches Fleisch, bei dem das Fleisch in Temperaturbereichen um den Gefrierpunkt ohne Einbuße an frischem Aussehen und ohne qualitätsmindernde bakteriologische oder chemische Veränderungen länger als drei Tage aufbewahrbar ist. Dies wird durch Verwendung eines Gsagemisches aus 50 - 70 Vol.% Sauerstoff und 30 bis 50 Vol.% Kohlendioxid erreicht.

In der US-A-3 047 404 wird die rote Farbe von Frischfleisch durch Verwendung einer Atmosphäre mit mindestens 30 Gew.% Sauerstoff erhalten.

Die Konservierung von Lebensmitteln, wie beispielsweise Frischfleisch, wird auch in der FR-A-2 595 583 beschrieben. Dabei wird ein Behälter teilweise evakuiert und mit einer genau definierten Gasmischung beschickt.

Kohlendioxid und Sauerstoff enthaltende Gasmischungen wurden ebenfalls in der DE-A-1 916 749 zum Verpacken von rohem Fleisch und rohen Fleischprodukten verwendet.

Food Technology 42(9) 1988, Seiten 65 - 69 gibt einen Überblick über die Verpackung von Fleisch mit Hilfe von Gasen und Gasmischungen.

Aus oder DE/EP 0 274 334 T1 ist ein Verfahren zur Behandlung von Fleisch bekannt, das dazu dient, das Fleisch mürbe zu machen und/oder seine Haltbarkeit und sein Aussehen bei der Konservierung zu verbessern. Dazu wird das Fleisch in einen geschlossenen Behälter gelegt, in dem ein Vakuum erzeugt wird. Anschließend wird in diesem Behälter ein komprimiertes, vorzugsweise steriles Gas eingebracht, um im Behälter einen Druck zu erzeugen, der höher ist als der Atmosphärendruck. Der Behälter soll dabei während der Niederdruck-/Hochdruckzyklen vorzugsweise nach Art eines Butterfasses um sich selbst rotieren. Dieses Behandlungsverfahren ist dazu bestimmt, während der Auftauphase von Gefrierfleisch, jedoch auch vor dem Einfrieren des Fleisches sowie nach dem Gefrieren des Fleisches angewendet zu werden.

Aufgabe der vorliegenden Erfindung ist es, das eingangs angegebene Verfahren in der Weise auszubilden, daß die Zartheit des Frischfleisches im Verlauf eines Reifungsvorgangs wesentlich erhöht und der Geschmack verbessert wird, daß die Gesamtkeimzahl entscheidend verringert und damit die Haltbarkeit wesentlich erhöht wird, und daß ein dauerhafter Frischezustand erreicht wird, der sich in einer intensiv roten Fleischfarbe äußert, die im freien Zustand des Fleisches mehrere Tage und unter Vakuum mehrere Wochen beibehalten wird.

Gelöst wird diese Aufgabe durch ein Verfahren zur Behandlung von Frischfleisch, insbesondere zum Reifen und Konservieren von frischem Rind-, Schweine-, Kalb-, Lamm-, Wild-, Geflügelfleisch, Fisch, Rohwurst und Schinken, bei dem das Frischfleisch zumindestens im wesentlichen allseitig zugänglich in einem luftdicht verschließbaren Raum angeordnet wird, in diesem Raum nach Abführung zumindest eines Teils des der Umgebungsatmosphäre entsprechenden Gasgemisches eine Sauerstoffatmosphäre mit einem Reinheitsgrad von wenigstens 50% aufgebaut und während der Zwischenlagerzeit, die insbesondere in Abhängigkeit von der Fleischart zwischen mehreren Tagen und mehreren Wochen betragen kann, wiederholt unter Erniedrigung des Drucks abgezogen und unter Erhöhung des Drucks erneut aufgebaut wird,
dadurch **gekennzeichnet,**
daß der Vorgang des Absaugens und erneuten Aufbaus der Sauerstoffatmosphäre während der Zwischenlagerzeit vorzugsweise ein- bis zweimal pro Tag durchgeführt wird, daß während des Absaugvorgangs in der ersten Phase des Absaugvorgangs mit einem steileren Druckabbaugradienten als in der letzten Phase des Absaugvorgangs gearbeitet wird, und daß die Sauerstoffatmosphäre im geschlossenen Raum nach dem Ende des jeweiligen Absaugvorgangs auf einen über Atmosphärendruck liegenden Druck, insbesondere auf 1,5 bis 2 bar über dem Atmosphärendruck, aufgebaut wird.

Vorteilhafte Gasmischungen weisen einen Sauerstoffgehalt von mehr als 80%, vorzugsweise von zumindest 93% auf.

Durch die gemäß der Erfindung geschaffene hohe Sauerstoffkonzentration wird erreicht, daß sich ein äußerst ausgeprägter Reifungs- und Konservierungseffekt ergibt. Dies steht im Zusammenhang mit einer Bindung und Abführung von Kohlendioxid und Stickstoff und einer durch Diffusion aus der Sauerstoffreinstatmosphäre in das Frischfleisch bewirkten deutlichen Erhöhung der Sauerstoffkonzentration im Fleisch.

Durch den wiederholten, aufgrund von Absaugvorgängen erreichten Druckabbau und den anschließenden folgenden Neuaufbau der Sauerstoffatmospähre tritt eine weitere, überraschende Erhöhung der insbesondere durch Diffusion bewirkten Sauerstoffkonzentration im Fleisch auf. Die Druckvariation hat offensichtlich zur Folge, daß die im Fleisch vorhandene Faserverkrampfung gelöst wird, die Fasern relativ zueinander beweglicher werden und damit das Fleisch für den angestrebten Sauerstoffeintritt zugänglicher wird. Als Folge davon ist es möglich, die Sauerstoffbeladung des Fleisches zu steigern, was praktisch eine Folge des sich einstellenden, mit einem Schwammeffekt vergleichbaren Saugeffektes ist.

Nach der Zwischenlagerzeit in der speziell geschaffenen Sauerstoffatmosphäre, die für Schweinefleisch typischerweise etwa drei Tage und für Rindfleisch etwa eine Woche dauern kann, wird ein Frischfleisch mit einem pH-Wert erhalten, der häufig sogar etwas höher als im Beschickungszustand ist. Da der pH-Wert ein Kriterium für den Qualitätszustand des Fleisches ist, wird auch anhand dieses Kennwertes deutlich, daß mit dem erfindungsgemäßen Verfahren unerwartete Frischewerte erzielt werden können, die sich bei Fleisch in einer ausgeprägt intensiv roten Farbe äußern, die in wiederum für die Erfindung typischer Weise lange beibehalten wird.

Ein weiterer wesentlicher Vorteil des Verfahrens nach der Erfindung ist, daß der auftretende Saftverlust während des Reifens sehr gering und beispielsweise bei Rindfleisch nur etwa 1 % und bei Schweinefleisch nur etwa 2 % beträgt. Diese angegebenen Werte stellen natürlich nur Beispiele dar.

Das überraschende Reifungsergebnis gestattet auch den Transport großer Fleischstücke ohne Verwendung von Vakuumhüllen, ohne daß sich die sonst übliche Dunkelverfärbung des Frischfleisches einstellt. Eine Haltbarkeit des Fleisches von 6 Tagen nach der Zwischenlagerzeit ist ohne zusätzliche Maßnahmen ohne weiteres möglich.

Dieses Verhalten des nach dem Verfahren gemäß der Erfindung gereiften Frischfleisches ermöglicht es auch, Frischfleisch in wiederverwendbaren Behältnissen, insbesondere Glasbehältnissen einzuschließen und auf diese Weise die heute üblichen Kunststoffolienverpackungen zu vermeiden und somit zu einer Verringerung der Umweltbelastung beizutragen. In dem verschließbaren Behältnis kann eine Sauerstoffatmospähre, gegebenenfalls unter geringem Überdruck, geschaffen werden.

Vorteilhaft ist auch, daß aufgrund der nach der Sauerstoffbehandlung vorhandenen hohen Sauerstoffkonzentration im Fleisch kein oder nur ein unwesentlicher Anteil an Sauerstoff aus der Umgebungsatmosphäre auf das Fleisch einwirken muß, um den Frischezustand lange aufrechtzuerhalten. Große, eine entsprechende Sauerstoffmenge fassende Behältnisse sind deshalb für die Aufbewahrung und den Transport des Fleisches nicht erforderlich.

Das erfindungsgemäße Verfahren kann besonders effektiv durchgeführt werden, wenn der Absaugvorgang während einer Zeitspanne von Zwei Stunden durchgeführt wird, wobei der Druck innerhalb des geschlossenen Raums bis zu einem Unterdruck von 0,99 bar, d. h. bis in Vakuumnähe, abgesenkt wird, und anschließend der Aufbau der Sauerstoffatmosphäre innerhalb des geschlossenen Raums bis zu einem Druck von 1,5 bis 2 bar und die Aufrechterhaltung dieser Sauerstoffatmospähre über 22 Stunden erfolgt. Ein derartiger 24-stündiger Absaug- und Sauerstoffbehandlungszyklus wird bei Schweinefleisch vorteilhafter Weise etwa dreimal und bei Rindfleisch etwa sechs- oder siebenmal wiederholt.

Die Druckabsenkung im Rahmen des Absaugvorganges wird vorzugsweise mit einem steilen Druckabfallgradienten durchgeführt, so daß die sich ergebende Druckerniedrigung einen ausgeprägten Lockerungseffekt im Fleisch erzeugt, der zur Entkrampfung und Destabilisierung der Fasern führt.

Je nach Art des Frischfleisches sind unterschiedliche Ausführungsformen der Erfindung besonders vorteilhaft. So werden bei Rind-, Kalb-, Lamm-, Wild-, Geflügelfleisch und Fisch besonders gute Resultate erzielt, wenn der geschlossene Raum während der Zwischenlagerzeit auf Kühlraumtemperatur gehalten und der Sauerstoff dem geschlossenen Raum mit einer Temperatur von -3°C bis +3°C, insbesondere 0°C, zugeführt wird. Bei Rohwurst und Schinken, die bzw. der auch unter den Sammelbegriff "Frischfleisch" fallen soll, kann es dagegen vorteilhaft sein, die Temperatur innerhalb des geschlossenen Raums während der Zwischenlagerzeit auf einer höheren Temperatur, beispielsweise +20°C, zu halten.

Besonders vorteilhafte Ausgestaltungen des Verfahrens nach der Erfindung sind in den Unteransprüchen angegeben.

Zur Durchführung des erfindungsgemäßen Verfahrens wird vorzugsweise ein eine luftdicht verschließbare Öffnung aufweisender Schrank verwendet, der zur Aufnahme eines Trägergestells zur Halterung des Frischfleisches sowie zumindest eine an eine Sauerstoffquelle anschließbare, insbesondere deckenseitig mündende Einlaßöffnung und zumindest eine eine definierte Abströmung aus dem Schrankinnenraum gewährleistende Abführöffnung aufweist, die vorzugsweise unterhalb der Einlaßöffnung, insbesondere am Boden oder in Bodennähe des Schranks angeordnet ist. Durch die Anordnung der Einlaß- und Abführöffnung an gegenüberliegenden Stellen des Schranks wird gewährleistet, daß der gesamte Innenraum weitgehend gleichmäßig mit Sauerstoff gefüllt wird.

Eine einfach zu handhabende Anordnung ergibt sich, wenn am Schrank eine Auffahrrampe für das Trägergestell schwenkbar angelenkt ist. Die Vorrichtung kann dabei so ausgelegt sein, daß die Auffahrrampe von außen am Schrank eingehängt wird. Weiterhin ist es auch denkbar, eine Konstruktion vorzusehen, bei der die Auffahrrampe in den Schrankinnenraum verschwenkbar und zwischen dem eingefahrenen Trägergestell und einer Schranktüre verstaubar ist.

Um die Schranktüre luft- und druckdicht verschließen zu können, ist nach einer vorteilhaften Ausführungsform der Erfindung eine pneumatische Dichtung in der Form eines um die Öffnung in einem geschlossenen Umlauf herumgeführten Schlauches vorgesehen, dessen Durchmesser durch Zuführung eines Fluids mit einem Überdruck größer 2,5 bar, insbesondere 5 bis 6 bar, elastisch erweiterbar ist.

Gemäß einer vorteilhaften Ausführungsform der Erfindung ist zur Speicherung von Sauerstoff ein außerhalb des Schranks angeordneter Vorratstank vorgesehen, der über eine mittels eines Magnetventils verschließbaren Abzweigleitung sowohl mit dem Sauerstofferzeuger als auch mit der Einlaßöffnung verbunden ist. Mit Hilfe dieses Vorratstanks ist es möglich, bereits während der Absaugphase Sauerstoff zu erzeugen und mit erhöhtem Druck zu speichern, so daß nach Beendigung der Absaugphase der im Vorratstank gespeicherte Sauerstoff sehr schnell in den geschlossenen Raum eingeleitet werden kann.

Vorteilhafterweise ist die Abführöffnung mit einer Abführleitung verbunden, welche durch ein insbesondere bei einem Überdruck von 1,5 bis 2 bar öffnendes Überdruckventil verschließbar ist. Hierdurch ist es möglich, die Sauerstoffatmosphäre im geschlossenen Raum bis zum Öffnungsdruck des Überdruckventils aufzubauen und anschließend unter Beibehaltung dieses Drucks eine kontinuierliche Sauerstoffdurchströmung aufrechtzuerhalten.

Weitere vorteilhafte Ausgestaltungen der Erfindung sind aus den Unteransprüchen ersichtlich.

Die Erfindung wird nachfolgend anhand der Zeichnung beispielsweise näher erläutert; in dieser zeigt:
- Fig. 1: eine schematische Seitenansicht eines zur Durchführung des erfindungsgemäßen Verfahrens geeigneten Schrankes,
- Fig. 2: eine schematische Seitenansicht eines in den Schrank nach Fig. 1 einfahrbaren Trägergestells und
- Fig. 3: eine schematische Darstellung zur Verdeutlichung der Funktionsweise der Vorrichtung zur Durchführung des erfindungsgemäßen Verfahrens.

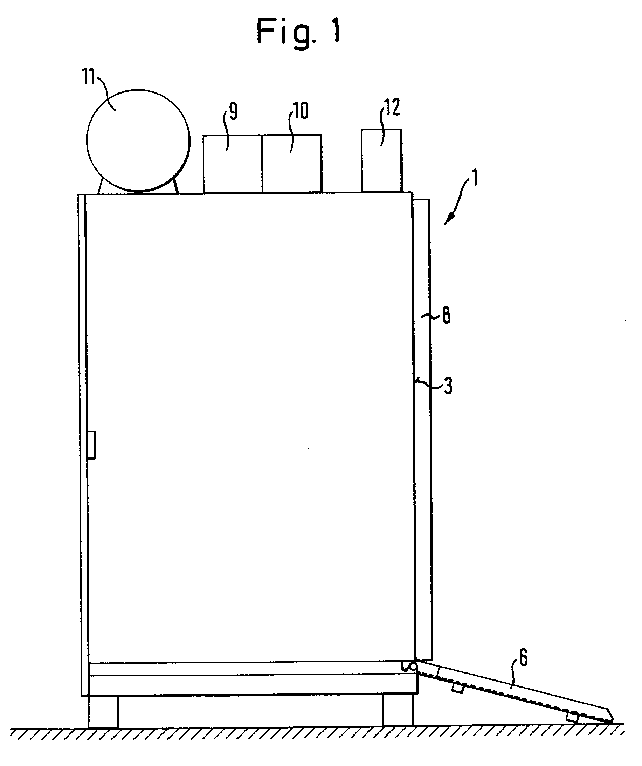

Fig. 1 zeigt einen vorzugsweise aus einer Schweißkonstruktion bestehenden, geschlossen ausgebildeten Schrank 1 mit einer beladeseitigen Öffnung 3, die mittels einer Schranktüre 8 dicht verschließbar ist.

Eine vorzugsweise einhängbar ausgebildete Auffahrrampe 6 ist im Türbereich am Schrank 1 angelenkt. Diese Auffahrrampe 6 kann so ausgebildet sein, daß sie in den Innenraum des Schrankes 1 verschwenkt und dort verstaut werden kann, so daß sie bei Bedarf jederzeit zur Verfügung steht, bei geschlossenem Schrank jedoch nie störend in Erscheinung tritt.

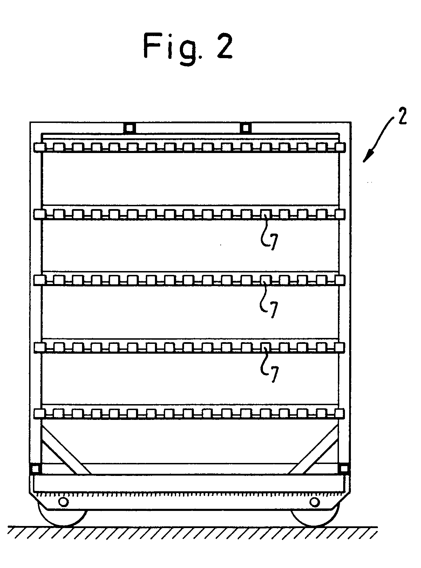

Fig. 2 zeigt ein aus einer Schweißkonstruktion bestehendes Trägergestell 2 mit einer Mehrzahl von Hängeeinrichtungen 7 für das Frischfleisch.

Durch Aufhängen oder kleinflächige Abstützung des Frischfleisches ist gewährleistet, daß das Frischfleisch allseitig für den im Innenraum des Schrankes 1 vorhandenen Reinstsauerstoff zugänglich ist und demgemäß der Sauerstoff unbehindert in das gesamte Fleischvolumen eindiffundieren kann.

Das Trägergestell 2 ist fahrbar ausgebildet und wird im beladenen Zustand über die Auffahrrampe 6 in den Innenraum des Schrankes 1 eingefahren. Nach dem Hochschwenken der Auffahrrampe 6 kann die Türe 8 des Schrankes 1 geschlossen und mit dem Sauerstoffbehandlungsverfahren begonnen werden.

Hierzu ist auf dem Schrank 1 außenseitig ein Sauerstofferzeuger 9, eine Evakuierungspumpe 10 sowie ein Sauerstoff-Vorratstank 11 und eine elektronische Steuereinheit 12 angebracht.

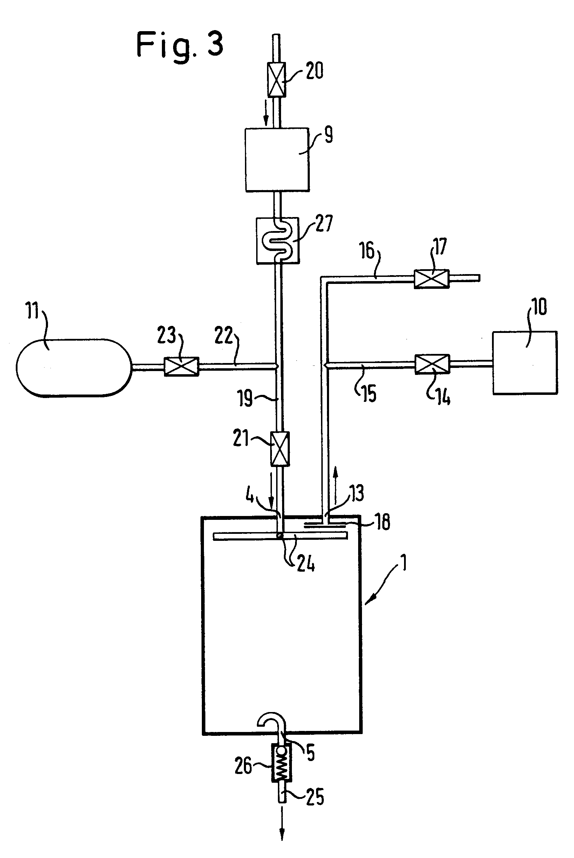

Der Schrank 1 weist ferner, wie Fig. 3 in schematischer Weise zeigt, deckenseitig eine Evakuierungsöffnung 13 und eine Sauerstoff-Einlaßöffnung 4 sowie bodenseitig eine Sauerstoff-Abführöffnung 5 auf.

Die Evakuierungspumpe 10 ist über eine mittels eines Magnetventils 14 verschließbare Rohrleitung oder einen Schlauch 15 mit der Evakuierungsöffnung 13 verbunden.

Von der Rohrleitung 15 zweigt zwischen dem Magnetventil 14 und der Evakuierungsöffnung 13 eine Rohrleitung oder ein Schlauch 16 ab, der ebenfalls mittels eines Magnetventils 17 verschließbar ist und in die Umgebungsatmosphäre mündet.

Am innerhalb des Schranks 1 liegenden Ende der Rohrleitung 15 sind zwei parallele, horizontale, plattenförmige Elemente 18 vorgesehen, wobei das untere plattenförmige Element das offene Ende der Rohrleitung 15 überdeckt. Auf diese Weise entsteht ein ringförmiger Spalt zwischen den beiden plattenförmigen Elementen 18, der ein großflächiges Absaugen der Luft bzw. des Sauerstoffs aus dem Schrank 1 und einen gleichmäßigen Evakuierungseffekt ermöglicht.

Der Sauerstofferzeuger 9 ist über eine Rohrleitung oder einen Schlauch 19 mit der Einlaßöffnung 4 verbunden, wobei das Ansaugende der Rohrleitung 19 mittels eines Magnetventils 20 verschließbar ist.

Zwischen dem Sauerstofferzeuger 9 und der Einlaßöffnung 4 ist weiterhin ein Wärmetauscher 27 in Form eines Peltier-Elementes vorgesehen. Hier wird die Temperatur des Sauerstoffs gemessen und der Sauerstoff auf circa 0°C abgekühlt. Diese Kühlung des Sauerstoffs trägt bedeutend zur Frische des Fleisches bei.

Zwischen dem Sauerstofferzeuger 9 bzw. dem Wärmetauscher 27 und der Einlaßöffnung 4 ist weiterhin ein Magnetventil 21 vorgesehen.

Von der Rohrleitung 19 zweigt zwischen dem Magnetventil 21 und dem Wärmetauscher 27 eine weitere Rohrleitung oder ein Schlauch 22 ab, welcher durch ein Magnetventil 23 verschließbar ist und zum Vorratstank 11 führt.

Die Rohrleitung 19 endet innerhalb des Schranks 1 in einer Sauerstoffverteilungsvorrichtung, die aus sternförmig angeordneten, d. h. vom Ende der Rohrleitung 19 sternförmig nach außen gerichteten Rohrelementen 24 besteht. Diese Rohrelemente 24 dienen zur gleichmäßigen Verteilung des zugeführten Sauerstoffs über den gesamten Innenraum des Schranks 1.

Die Abführung des Sauerstoffs aus dem Innenraum des Schranks 1 erfolgt ab einem bestimmten, vorgebbaren Druck über eine Rohrleitung oder einen Schlauch 25, der unterhalb dieses vorgebbaren Drucks von einem Überdruckventil 26 verschlossen wird. Das innerhalb des Schranks 1 angeordnete Ende der Rohrleitung 25 ist bogenförmig zum Boden des Schranks 1 hin zurückgeführt, um das Eindringen von Wasser oder Schmutz zu verhindern.

Diese Vorrichtung arbeitet bei der Durchführung des erfindungsgemäßen Verfahrens folgendermaßen:

Nach der Beschickung des Schranks 1 mit dem Frischfleisch, was zweckmäßigerweise auf dem in Fig. 2 dargestellten Trägergestell 2 erfolgt, wird die Schranktüre 3 geschlossen und verriegelt.

Die Steuereinheit 12 veranlaßt nun die Befüllung einer nicht dargestellten, pneumatischen Dichtung in der Form eines um die Öffnung 3 in einem geschlossenen Umlauf herumgeführten Schlauches mit luft hohen Drucks, wodurch der Durchmesser des Schlauches erweitert wird und die Türe 3 gegenüber dem Schrankkörper gas- und druckdicht abgedichtet wird.

In diesem Anfangszustand sind die Magnetventile 14, 17, 20, 21 und 23 geschlossen.

Anschließend wird der Innenraum des Schranks 1 etwa zwei Stunden lang evakuiert, wobei das Magnetventil 14 über die Steuereinheit 12 geöffnet wird. Am Ende der zweistündigen Evakuierungszeit ist innerhalb des Schranks 1 nahezu Vakuum erreicht, d. h. es herrscht ein Unterdruck von etwa 0,99 bar.

Gleichzeitig mit Beginn der Evakuierung des Schranks 1 beginnt die Sauerstofferzeugung über den Sauerstofferzeuger 9, wobei die Magnetventile 20 und 23 geöffnet werden, das Magnetventil 21 jedoch noch geschlossen bleibt. Der Sauerstoff strömt somit nach einer entsprechenden Reinigung über den Wärmetauscher 20 und die Rohrleitung 22 in den Vorratstank 11, in dem am Ende der zweistündigen Evakuierungsdauer ein Überdruck von etwa 2,1 bar herrscht.

Nach etwa zwei Stunden wird die Evakuierung des Schrankinnenraums beendet und das Magnetventil 14 geschlossen. Das Magnetventil 21 wird nun für eine Zeitdauer von etwa 22 Stunden geöffnet, so daß der unter Überdruck stehende Sauerstoff aus dem Vorratstank 11 in den Innenraum des Schranks 1 strömen kann.

Nachdem das Magnetventil 23 etwa 10 Minuten geöffnet war und die Sauerstoffatmosphäre innerhalb des Schranks 1 über den Vorratstank 11 relativ schnell aufgebaut worden ist, schließt das Magnetventil 23, so daß der Sauerstoff vom Sauerstofferzeuger 9 auf direktem Weg in den Schrankinnenraum geleitet wird.

Nach einer etwa achtstündigen Aufbauphase ist im Schrankinnenraum ein Sauerstoffdruck von etwa 1,8 bar erreicht, bei dem das Überdruckventil 26 öffnet. Ab diesem Zeitpunkt strömt der Sauerstoff kontinuierlich vom Bereich der Einlaßöffnung 4 zur Abführöffnung 5, so daß der Schrankinnenraum ständig mit frischem Sauerstoff geflutet wird.

Ein derartiger, 24 Stunden dauernder Zyklus wird bei Schweinefleisch circa dreimal und bei Rindfleisch circa sechs- oder siebenmal wiederholt.

Nach Beendigung der gewünschten Zwischenlagerzeit wird der Sauerstofferzeuger 9 ausgeschaltet und die beiden Magnetventile 20 und 21 werden geschlossen. Das Magnetventil 17 wird für circa fünf Minuten geöffnet, um einen Druckausgleich zwischen Schrankinnenraum und Umgebungsatmosphäre zu erhalten.

Vor dem Öffnen der Schranktüre 3 wird zwangsläufig die Luft aus der pneumatischen Türdichtung über ein entsprechend angesteuertes Magnetventil abgelassen, um zu vermeiden, daß beim Öffnen der Tür durch den fehlenden Gegendruck die Türdichtung beschädigt wird.

## Patentansprüche

1. Verfahren zur Behandlung von Frischfleisch, insbesondere zum Reifen und Konservieren von frischem Rind-, Schweine-, Kalb-, Lamm-, Wild-, Geflügelfleisch, Fisch, Rohwurst und Schinken, bei dem das Frischfleisch zumindestens im wesentlichen allseitig zugänglich in einem luftdicht verschließbaren Raum angeordnet wird, in diesem Raum nach Abführung zumindest eines Teils des der Umgebungsatmosphäre entsprechenden Gasgemisches eine Sauerstoffatmosphäre mit einem Reinheitsgrad von wenigstens 50% aufgebaut und während der Zwischenlagerzeit, die insbesondere in Abhängigkeit von der Fleischart zwischen mehreren Tagen und mehreren Wochen betragen kann, wiederholt unter Erniedrigung des Drucks abgezogen und unter Erhöhung des Drucks erneut aufgebaut wird,
dadurch **gekennzeichnet,**
daß der Vorgang des Absaugens und erneuten Aufbaus der Sauerstoffatmosphäre während der Zwischenlagerzeit vorzugsweise ein- bis zweimal pro Tag durchgeführt wird, daß während des Absaugvorgangs in der ersten Phase des Absaugvorgangs mit einem steileren Druckabbaugradienten als in der letzten Phase des Absaugvorgangs gearbeitet wird, und daß die Sauerstoffatmosphäre im geschlossenen Raum nach dem Ende des jeweiligen Absaugvorgangs auf einen über Atmosphärendruck liegenden Druck, insbesondere auf 1,5 bis 2 bar über dem Atmosphärendruck, aufgebaut wird.

2. Verfahren nach Anspruch 1,
dadurch **gekennzeichnet,**
daß der Absaugvorgang während einer Zeitspanne von wenigen Minuten bis zu sechs Stunden, insbesondere von eins bis drei und vorzugsweise von zwei Stunden durchgeführt wird, wobei der Druck innerhalb des geschlossenen Raums auf einen deutlich unter dem Atmosphärendruck liegenden Druck, insbesondere bis zu einem Unterdruck von 0,99 bar, d. h. bis in Vakuumnähe, abgesenkt wird.

3. Verfahren nach Anspruch 1 oder 2,
dadurch **gekennzeichnet,**
daß der Vorgang des Absaugens und erneuten Aufbaus der Sauerstoffatmosphäre während der Zwischenlagerzeit vorzugsweise ein- bis zweimal pro Tag durchgeführt wird, wobei vorzugsweise während des Absaugvorgangs in der ersten Phase des Absaugvorgangs mit einem steileren Druckabbaugradienten als in der letzten Phase des Absaugvorgangs gearbeitet wird.

4. Verfahren nach einem der vorhergehenden Ansprüche,
dadurch **gekennezeichnet,**
daß während des Absaugvorgangs der Druckabbau stufenweise erfolgt, wobei vorzugsweise in den einzelnen Druckabbaustufen unterschiedliche Verweilzeiten, insbesondere größer werdende Verweilzeiten mit zunehmenden Druckabbau, bei im wesentlichen konstantem Druckwert gewählt werden.

5. Verfahren nach einem der vorhergehenden Ansprüche,
dadurch **gekennzeichnet,**
daß während des Absaugvorgangs Sauerstoff erzeugt und außerhalb des geschlossenen Raums mit Überdruck, vorzugsweise mit 1,5 bis 3 bar und insbesondere mit 2,1 bar Überdruck gegenüber der Umgebungsluft gespeichert wird, und daß zumindest der anfängliche Aufbau der Sauerstoffatmosphäre im Raum nach Beendigung des Absaugvorgangs mittels des gespeicherten Sauerstoffs beschleunigt durchgeführt wird.

6. Verfahren nach einem der vorhergehenden Ansprüche,
dadurch **gekennzeichnet,**
daß der geschlossene Raum während der Zwischenlagerzeit auf Kühlraumtemperatur gehalten wird, wobei vorzugsweise der Sauerstoff dem geschlossenen Raum mit einer Temperatur von -3°C bis +3°C, insbesondere 0°C, zugeführt wird, und daß insbesondere die Sauerstoffatmosphäre im geschlossenen Raum nach dem Ende des jeweiligen Absaugvorgangs auf einen dem Atmosphärendruck entsprechenden oder einen über Atmosphärendruck liegenden Druck, insbesondere auf 1,5 bis 2 bar über dem Atmosphärendruck, aufgebaut wird.

7. Verfahren nach einem der vorhergehenden Ansprüche,
dadurch **gekennzeichnet,**
daß während der Zwischenlagerzeit eine kontinuierliche oder diskontinuierliche Ergänzung der Sauerstoffatmosphäre im geschlossenen Raum vorgenommen wird, wobei vorzugsweise in den geschlossenen Raum kontinuierlich Sauerstoff mit einem Druck eingeleitet wird, der höher ist als ein vorgebbarer Ablaßdruck, so daß sich aufgrund der Druckdifferenz eine kontinuierliche Durchströmung einstellt.

8. Verfahren nach einem der vorhergehenden Ansprüche,
dadurch **gekennzeichnet,**
daß das Frischfleisch in gut durchgekühltem Zustand, insbesondere mit einer Temperatur im Bereich von 1°C bis 3°C, in den geschlossenen bzw. verschließbaren Raum eingebracht wird, wobei vorzugsweise das den geschlossenen Raum enthaltende Behältnis während der Zwischenlagerzeit in einem Kühlraum von einer Temperatur im Bereich von -3°C bis +3°C angeordnet wird.

9. Verfahren nach einem der vorhergehenden Ansprüche,
dadurch **gekennzeichnet,**
daß der Sauerstoff dem geschlossenen Raum aus Sauerstoff-Flaschen oder in Form von Flüssigsauerstoff zugeführt wird.

10. Vorrichtung zur Durchführung des Verfahrens nach einem oder mehreren der vorhergehenden Ansprüche,
**gekennzeichnet** durch einen eine luftdichtverschließbare Öffnung (3) aufweisenden Schrank (1) zur Aufnahme eines Trägergestells (2) zur Halterung des Frischfleisches sowie zumindest eine an eine Sauerstoffquelle anschließbare, insbesondere deckenseitig mündende Einlaßöffnung (4) und zumindest eine eine definierte Abströmung aus dem Schrankinnenraum gewährleistende Abführöffnung (5), die vorzugsweise unterhalb der Einlaßöffnung (4), insbesondere am Boden oder in Bodennähe des Schranks (1) angeordnet ist, und daß vorzugsweise das Trägergestell (2) fahrbar ausgebildet und mit Hängeeinrichtungen (7) für das Frischfleisch ausgestattet und am Schrank (1) eine Auffahrrampe (6) für das Trägergestell (2) schwenkbar angelenkt ist.

11. Vorrichtung nach Anspruch 10,
dadurch **gekennezichnet,**
daß zum luft- und druckdichten Verschließen der Schranktüre (8) eine pneumatische Dichtung in der Form eines um die Öffnung (3) in einem geschlossenen Umlauf herumgeführten Schlauches vorgesehen ist, dessen Durchmesser durch Zuführung eines Fluids mit einem Überdruck größer 2,5 bar, insbesondere 5 bis 6 bar, elastisch erweiterbar ist, wobei vorzugsweise die Zuführung des Sauerstoffs über eine innerhalb des Schranks (1) angeordnete Sauerstoffverteilungsvorrichtung erfolgt, die aus sternförmig angeordneten, d. h. radial abstehenden Rohrelementen (24) besteht.

12. Vorrichtung nach Anspruch 10 oder 11,
dadurch **gekennzeichnet,**
daß der Schrank (1) zur Abführung des der Umgebungsatmosphäre entsprechenden Gasgemisches eine vorzugsweise an der Decke angeordnete Evakuierungsöffnung (13) aufweist, die auf der Schrankinnenseite von einem beabstandeten, plattenförmigen Element (18) überdeckt ist.

13. Vorrichtung nach einem der Ansprüche 10 bis 13,
dadurch **gekennzeichnet,**
daß zur Speicherung von Sauerstoff ein außerhalb des Schranks (1) angeordneter Vorratstank (1)1 vorgesehen ist, der über eine mittels eines Magnetventils (23) verschließbare Abzweigleitung (22) sowohl mit dem Sauerstofferzeuger (9) als auch mit der Einlaßöffnung (4) verbunden ist und daß insbesondere die Abführöffnung (5) mit einer Rohrleitung oder einem Schlauch (25) verbunden ist, welcher durch ein insbesondere bei einem Überdruck von 1,5 bis 2 bar öffnendes Überdruckventil (26) verschließbar ist.

## Claims

1. Method of treating fresh meat, in particular for the maturation and conservation of fresh beef, pork, veal, lamb, game, poultry meat, fish, raw sausage and ham, in which the fresh meat is arranged so that it is at least essentially accessible from all sides in a chamber which can be closed off in air-tight manner, and in which, after leading away at least a part of the gas mixture forming the ambient atmosphere, an oxygen atmosphere is built up in this chamber with a degree of purity of at least 50 % and, during the time of intermediate storage, which can amount to between several days and several weeks, in particular in dependence on the type of meat, is repeatedly drawn off while lowering the pressure and built up anew while increasing the pressure,
characterised in that the procedure of sucking away and renewed building up of the oxygen atmosphere is preferably carried out at least once to twice per day during the period of intermediate storage; in that during the sucking away procedure one operates with a steeper pressure reduction gradient in the first phase of the suction procedure than in the last phase of the suction procedure; and in that the oxygen atmosphere in the closed space is built up at the end of the respective sucking away procedure to a pressure lying above atmospheric pressure, in particular to 1.2 to 2 bar above the atmospheric pressure.

2. Method in accordance with claim 1, characterised in that the sucking away procedure is carried out during a time interval of a few minutes for up to six hours, in particular from one to three and preferably of two hours, with the pressure within the closed chamber being reduced to a pressure which lies substantially below the atmospheric pressure, in particular to a depression of 0.99 bar, i.e. near to a vacuum.

3. Method in accordance with claim 1 or claim 2, characterised in that the procedure of sucking away and renewed building up of the oxygen atmosphere during the period of intermediate storage is carried out preferably once to twice per day, preferably with a more rapid pressure reduction gradient being used in the first phase of the sucking away procedure than in the last phase of the sucking away procedure.

4. Method in accordance with one of the preceding claims, characterised in that the pressure reduction takes place in stages during the sucking away process, with different dwell times preferably being selected at a substantially constant pressure value in the individual pressure reduction stages, in particular dwell times which increase with increasing pressure reduction.

5. Method in accordance with one of the preceding claims, characterised in that during the sucking away procedure, oxygen is generated and is stored outside of the closed chamber at excess pressure, preferably with 1.5 to 3 bar and in particular with 2.1 bar excess pressure relative to the ambient air; and in that at least the initial build-up of the oxygen atmosphere in the chamber after termination of the sucking away procedure is carried in accelerated manner by means of the stored oxygen.

6. Method in accordance with one of the preceding claims, characterised in that the closed chamber is kept at cool-room temperature during the period of intermediate storage, with the oxygen preferably being supplied to the closed chamber at a temperature of -3°C to +3°C, in particular 0°C; and in that the oxygen atmosphere in the closed chamber at the end of the respective sucking away procedure is built up to a pressure which corresponds to the atmospheric pressure or lies above atmospheric pressure, in particular to 1.5 to 2 bar above the atmospheric pressure.

7. Method in accordance with one of the preceding claims, characterised in that during the period of intermediate storage a continuous or a discontinuous supplementation of the oxygen atmosphere is effected in the closed chamber, with oxygen preferably being continuously introduced into the closed chamber at a pressure which is higher than a predeterminable discharge pressure so that, as a result of the pressure difference, a continuous throughflow sets in.

8. Method in accordance with one of the preceding claims, characterised in that the fresh meat is introduced into the closed or closable chamber in a well through-cooled state, in particular at a temperature in the range from 1°C to 3°C, with the container which contains the closed chamber preferably being arranged during the period of intermediate storage in a cool-room of a temperature in the range from -3°C to +3°C.

9. Method in accordance with one of the preceding claims, characterised in that the oxygen is supplied to the closed chamber from oxygen bottles or in the form of liquid oxygen.

10. Apparatus for carrying out the method in accordance with one or more of the preceding claims, characterised by a cabinet (1) having a closable opening (3) for receiving a carrier frame (2) for the holding of the fresh meat and also at least one inlet opening (4) which can be connected to an oxygen source, in particular an outlet opening which opens at the ceiling side, and at least one outlet opening (5) which ensures a defined flow out of the interior space of the cabinet, the outlet opening (5) being preferably arranged beneath the inlet opening (4), in particular at the floor or in the vicinity of the floor of the cabinet (1); and in that the carrier frame (2) is of mobile design and is equipped with hanging means (7) for the fresh meat and a run-up ramp (6) for the carrier frame (2) is pivotally hinged to the cabinet (1).

11. Apparatus in accordance with claim 10, characterised in that, for the air-tight and pressure-tight closure of the cabinet doors (8) there is provided a pneumatic seal in the form of a hose guided around the opening (3) in a closed circuit, with the diameter of the hose being elastically increasable through the supply of a fluid with an excess pressure greater than 2.5 bar, in particular 5 to 6 bar, and with the supply of the oxygen preferably taking place via an oxygen distribution device arranged within the cabinet (1) and consisting of tube elements (24) arranged in star-like manner, i.e. radially projecting.

12. Apparatus in accordance with claim 10 or claim 11, characterised in that the cabinet (1) has an evacuation opening (13) which is preferably arranged at the ceiling for the leading away of the gas mixture corresponding to the ambient atmosphere, with the evacuation opening (13) being covered over at the inner side of the cabinet by a spaced plate-like element (18).

13. Apparatus in accordance with one of the claims 10 to 13, characterised in that for the storage of oxygen a supply tank (11) is provided outside of the cabinet (1) and is connected via a branch line (22) which can be closed by means of a solenoid valve (23) both with the oxygen generator (9) and also with the inlet opening (4); and in that the outlet opening (5) is in particular connected to a pipeline or to a hose (25) which can be closed by an excess pressure valve (26) which in particular opens at an excess pressure of 1.5 to 2 bar.

## Revendications

1. Procédé de traitement de viande fraîche, en particulier pour la maturation et la conservation de viande fraîche de boeuf, de porc, de veau, de mouton, de gibier, de volaille, de poisson, de saucisse crue et de jambon, dans lequel la viande fraîche est placée dans un local pouvant être fermé de manière étanche à l'air, accessible au moins pour l'essentiel de toutes parts, une atmosphère d'oxygène d'un niveau de pureté d'au moins 50% est établie dans ce local après évacuation d'au moins une partie du mélange gazeux correspondant à l'atmosphère ambiante et, pendant la période de stockage intermédiaire, qui peut durer de plusieurs jours à plusieurs semaines en fonction, en particulier, du type de viande, elle est évacuée de manière répétée par abaissement de la pression et de nouveau établie par augmentation de la pression, caractérisé en ce que le processus d'évacuation et de rétablissement de l'atmosphère d'oxygène pendant la période de stockage intermédiaire est effectué de préférence une a deux fois par jour, en ce que, pendant le processus d'évacuation, l'on travaille dans la première phase du processus d'évacuation avec un gradient de baisse de pression plus important que dans la dernière phase du processus d'évacuation, et en ce que l'atmosphère d'oxygène dans le local fermé est établie, après la fin du processus d'évacuation respectif, à une pression supérieure à la pression atmosphérique, en particulier à 1,5 à 2 bar au-dessus de la pression atmosphérique.

2. Procédé selon la revendication 1, caractérisé en ce que le processus d'évacuation est effectué sur un intervalle de temps de quelques minutes à six heures, en particulier de une à trois et de préférence de deux heures, la pression à l'intérieur du local fermé étant abaissée jusqu'à une pression sensiblement inférieure à la pression atmosphérique, en particulier jusqu'à une pression négative de 0,99 bar, c'est-à-dire proche du vide.

3. Procédé selon la revendication 1 ou 2, caractérisé en ce que le processus d'évacuation et de rétablissement de l'atmosphère d'oxygène pendant la période de stockage intermédiaire est effectué de préférence une à deux fois par jour, en travaillant dans la première phase du processus d'évacuation avec un gradient de baisse de pression plus important que dans la dernière phase du processus d'évacuation.

4. Procédé selon l'une des revendications précédentes, caractérisé en ce que, pendant le processus d'aspiration, la réduction de pression se fait par étapes, différents temps de séjour, en particulier des temps de séjour augmentant lorsque la réduction de pression augmente, étant de préférence choisis dans les différentes étapes de la réduction de pression.

5. Procédé selon l'une des revendications précédentes, caractérisé en ce que, pendant le processus d'évacuation, de l'oxygène est produit et stocké à l'extérieur du local fermé, sous pression, de préférence avec une surpression de 1,5 bar à 3 bar, et en particulier de 2,1 bar, par rapport à l'air ambiant, et en ce qu'au moins le début du rétablissement de l'atmosphère d'oxygène dans le local, à la fin du processus d'évacuation, est effectué de manière accélérée au moyen de l'oxygène stocké.

6. Procédé selon l'une des revendications précédentes, caractérisé en ce que le local fermé, pendant la phase de stockage intermédiaire, est maintenu à une température de réfrigération, l'oxygène étant introduit dans le local fermé de préférence à une température de - 3°C à + 3°C, en particulier de 0°C, et en ce qu'en particulier l'atmosphère d'oxygène dans le local fermé, à la fin d'un processus d'évacuation respectif, est établie à une pression correspondant ou supérieure à la pression atmosphérique, en particulier à 1,5 à 2 bar au-dessus de la pression atmosphérique.

7. Procédé selon l'une des revendications précédentes, caractérisé en ce que, pendant la période de stockage intermédiaire, on procède à un complètement continu ou discontinu de l'atmosphère d'oxygène dans le local fermé, de l'oxygène étant de préférence introduit en continu dans le local fermé, à une pression qui est supérieure à une pression de purge prédéterminable, de sorte que, du fait de la différence de pression, il s'établit un écoulement continu.

8. Procédé selon l'une des revendications précédentes, caractérisé en ce que la viande fraîche est placée dans le local fermé ou à fermeture dans un état de bon refroidissement, en particulier avec une température dans le domaine de 1°C à 3°C, le récipient contenant le local fermé étant de préférence placé, pendant la période de stockage intermédiaire, dans un local réfrigérant à une température dans le domaine de - 3°C à + 3°C.

9. Procédé selon l'une des revendications précédentes, caractérisé en ce que l'oxygène est introduit dans le local fermé depuis des bouteilles d'oxygène ou sous forme d'oxygène liquide.

10. Dispositif pour mettre en oeuvre le procédé selon l'une ou plusieurs des revendications précédentes, caractérisé par une chambre (1) présentant une ouverture (3) pouvant se fermer de manière étanche à l'air, chambre destinée à recevoir une ossature porteuse (2) pour porter la viande fraîche, ainsi qu'au moins une ouverture d'admission (4) se raccordant à une source d'oxygène et débouchant en particulier au niveau du plafond, et au moins une ouverte d'évacuation (5) garantissant une évacuation définie depuis l'espace intérieur de la chambre, et qui est placée de préférence au-dessous de l'ouverture d'admission (4), en particulier sur le sol ou à proximité du sol de la chambre (1), et en ce que de préférence l'ossature porteuse (2) est formée pour pouvoir rouler et est équipée de dispositifs d'accrochage (7) pour la viande fraîche, et une rampe d'accès (6) pour l'ossature porteuse (2) est articulée de manière pivotante sur la chambre (1).

11. Dispositif selon la revendication 10, caractérisé en ce, que, pour fermer les portes (8) de la chambre de manière étanche à l'air et à la pression, un joint pneumatique sous la forme d'un tuyau faisant le tour de l'ouverture (3) en contour fermé est prévu, dont le diamètre peut s'élargir de manière élastique par introduction d'un fluide présentant une surpression supérieure à 2,5 bar, en particulier de 5 à 6 bar, l'introduction de l'oxygène se faisant de préférence par l'intermédiaire d'un dispositif de répartition d'oxygène placé à l'intérieur de la chambre (1), dispositif qui est constitué d'éléments tubulaires (24) disposés en étoile, c'est-à-dire partant dans le sens radial.

12. Dispositif selon la revendication 10 ou 11, caractérisé en ce que, pour évacuer le mélange gazeux correspondant à l'atmosphère ambiante, la chambre (1) présente un ouverture d'évacuation (13) placée de préférence au plafond, qui est recouverte du côté intérieur de la chambre par un élément espacé en forme de plaque (18).

13. Dispositif selon l'une des revendications 10 à 13, caractérisé en ce que, pour stocker l'oxygène, il est prévu un réservoir (11) placé à l'extérieur de la chambre (1), qui est relié, par l'intermédiaire d'une conduite de ramification (22) se fermant au moyen d'une vanne magnétique (23), aussi bien au générateur d'oxygène (9) qu'à l'ouverture d'admission (4), et en ce qu'en particulier l'ouverture d'évacuation (5) est reliée à une canalisation ou un tuyau (25) qui peut être fermé(e) par une soupape de surpression (26) s'ouvrant en particulier pour une surpression de 1,5 à 2 bar.
